# EUROPEAN PATENT SPECIFICATION

(11) **EP 3 388 771 B1**
(45) Date of publication and mention of the grant of the patent: **04.08.2021**
(21) Application number: 18166302.2
(22) Date of filing: 09.04.2018
(51) Int. Cl.: F28F 3/04, F28D 9/00, B33Y 10/00, B33Y 80/00, B29C 64/153

(54) **PARTIALLY ADDITIVELY MANUFACTURED HEAT EXCHANGER**
TEILWEISE ADDITIV GEFERTIGTER WÄRMETAUSCHER
ÉCHANGEUR DE CHALEUR PARTIELLEMENT FABRIQUÉ DE MANIÈRE ADDITIVE

(30) Priority: 10.04.2017 US 201715483379
(43) Date of publication of application: 17.10.2018
(73) Proprietor: Raytheon Technologies Corporation, Farmington, CT 06032 (US)
(72) Inventor: FURRER, David Ulrich, Marlborough, CT Connecticut 06447 (US); BURLATSKY, Sergei F., West Hartford, CT Connecticut 06117 (US)
(74) Representative: Dehns

(56) References cited:
- DE-A1-102004 040 949
- DE-A1-102004 041 309
- DE-A1-102015 203 472
- FR-A1- 2 965 200
- FR-A1- 3 036 179
- US-A- 5 803 600
- US-A1- 2008 149 313
- US-A1- 2008 156 469
- US-A1- 2015 137 412

## Description

### TECHNICAL FIELD

The present disclosure relates generally to heat exchangers, and more specifically to a partially additively manufactured heat exchanger. Such a partially additively manufactured heat exchanger according to the preamble of claim 1 and manufacturing method according to the preamble of claim 9 is known from US 2015/0137412 A1 and FR2 965 200 A1.

### BACKGROUND

Heat exchangers, such as those utilized in aircraft or any similar application, typically include multiple layered channels with alternating hot and cold fluid passing through the channels. In such examples, a thin wall separating each channel from the adjacent channels is desirable as the thickness of the separating wall affects how efficiently heat can transfer from a hot channel to an adjacent cold channel through the wall separating the channels.

Existing additive manufacturing methods used to construct the heat exchanger structures limit the geometry capabilities and thickness capabilities of heat exchanger designs and prevent the utilization of some thin wall structures.

### SUMMARY OF THE INVENTION

According to a first aspect of the present invention, there is provided a heat exchanger as set forth in claim 1.

In an example of the above described heat exchanger the plurality of additively manufactured ribs in at least one layer of the plurality of layers are skewed relative to the plurality of additively manufactured ribs in an adjacent layer.

In another example of any of the above described heat exchangers the plurality of additively manufactured ribs in at least one layer of the plurality of layers are aligned with the plurality of additively manufactured ribs in an adjacent layer.

In another example of any of the above described heat exchangers the foil layer has a thickness of approximately 25 microns.

In another example of any of the above described heat exchangers each of the additively manufactured ribs has a height in the range of 50-200 microns.

In another example of any of the above described heat exchangers each of the foil layers includes micro corrugations.

In another example of any of the above described heat exchangers each of the foil layers includes macro corrugations.

In another example of any of the above described heat exchangers each of the foil layers includes micro corrugations.

In another example of any of the above described heat exchangers the heat exchanger is one of an air-air heat exchanger, an air-fuel heat exchanger, an air-oil heat exchanger, and a fuel-oil heat exchanger.

According to a further aspect of the present invention, there is provided a method as set forth in claim 9.

In an example of the above described exemplary method for constructing a partially additively manufactured heat exchanger additively manufacturing a plurality of additional ribs comprises additively manufacturing additional ribs skewed relative to the ribs of the adjacent layer.

In another example of any of the above described exemplary methods for constructing a partially additively manufactured heat exchanger additively manufacturing a plurality of additional ribs comprises additively manufacturing additional ribs aligned with the ribs of the adjacent layer.

These and other features of the present invention can be best understood from the following specification and drawings, the following of which is a brief description.

### BRIEF DESCRIPTION OF THE DRAWINGS

Figure 1 illustrates an exemplary additive manufacturing machine.
Figure 2 schematically illustrates a side view of an exemplary heat exchanger constructed using a partially additive manufacturing construction technique described herein.
Figure 3 schematically illustrates an isometric view of a base layer of the heat exchanger of Figure 2.
Figure 4 schematically illustrates a cross sectional view of multiple alternative rib structures that can be utilized in the partial additively manufactured heat exchanger described herein.
Figure 5 schematically illustrates rotating channel orientations in multiple layers of a partially additively manufactured heat exchanger.
Figure 6 schematically illustrates a macro corrugation of a foil layer for utilization in a partially additively manufactured heat exchanger.
Figure 7 schematically illustrates a micro corrugation of a foil layer for utilization in a partially additively manufactured heat exchanger.

### DETAILED DESCRIPTION OF AN EMBODIMENT

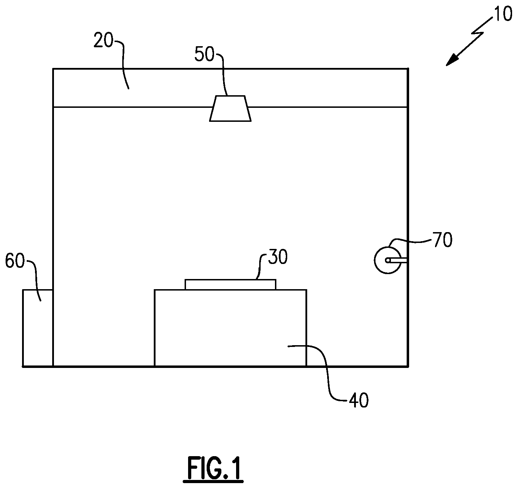

Figure 1 schematically illustrates an exemplary additive manufacturing machine 10 including a manufacturing chamber 20. Within the manufacturing chamber 20 is a powder bed 30 supported on a pedestal 40. A laser 50, or other focused heat source, is movably mounted above the powder bed 30 and projects a beam onto a focused portion of the powder bed 30 to create a melt pool. As the laser 50 travels across the powder bed, the melt pool cools, and solidifies and creates a layer in a desired shape according to known additive manufacturing techniques. Once a layer has been constructed, a new powder bed is deposited, and the next layer is constructed on top of the existing layer. This process is iterated to create a three dimensional structure. A controller 60 is connected to the additive manufacturing machine 10 and controls the functions of the additive manufacturing machine 10.

Due to the nature of additive manufacturing technologies, certain thicknesses and three dimensional structures cannot reliably be achieved without the presence of too many flaws. One such structure is a thin wall boundary between heat exchanger channels. In order to create such a wall, the illustrated exemplary additive manufacturing machine further includes a foil roll 70. The foil roll 70 is configured to be automatically disposed on top of one or more layers of the additively manufactured component, thereby allowing for the creation of the thin wall. Once the foil layer is disposed on top of an additively manufactured layer, the next additively manufactured layer is constructed using the standard additive manufacturing techniques on top of the foil layer. The application of heat from the laser 50 bonds the foil layer to the previous additively manufactured layer, and to the new structure being created on top of the foil layer, integrating the foil layer into the additively manufactured component. This alternating additive manufacturing and foil layer application is referred to as partial additive manufacturing.

The hybrid approach described above includes the use of a foil, or other sheet material (referred to herein generally as foil), which is produced via a conventional rolling process and the use of an additive manufacturing process to successively join foils and additively manufactured layers to build up an intricate channel structure. The foil material is, in some examples, made from very high temperature, oxidation resistant alloys. The additively manufactured ribs are, in some examples, produced from the same material as the foil, or, in alternative examples, from a distinct material from the foil, depending on the specific requirements of a given heat exchanger.

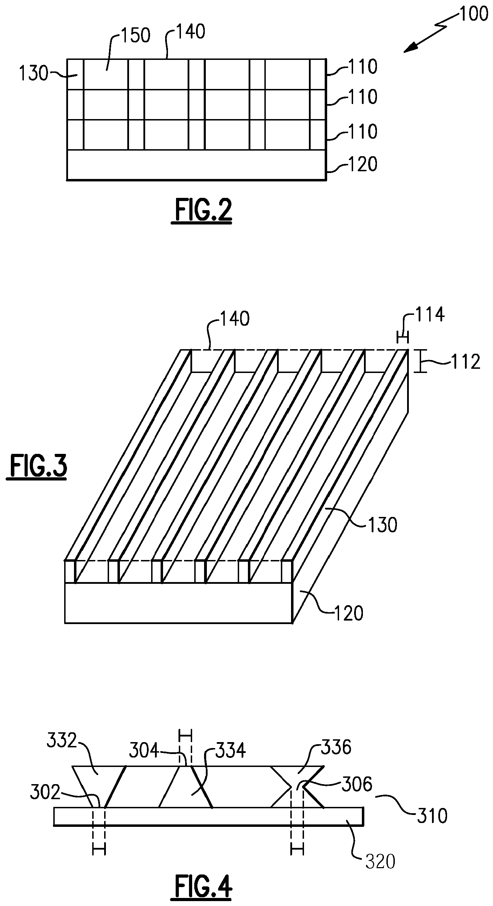

Figure 2 schematically illustrates an exemplary heat exchanger 100 constructed using a partial additive manufacturing technique. The thin walled heat exchanger 100 includes three layers 110 created on top of a base structure 120. In practical implementations, any number of additional layers 110 can be created iteratively, and the heat exchanger 100 is not limited to the illustrated three layers 110.

Each layer 110 includes multiple ribs 130 protruding upwards from either the base structure 120 (in the case of the lowest layer 110) or from the immediately adjacent layer 110 (in the case of each subsequent layer 110.) As used herein "up" and "down" refer to the orientation of the heat exchanger 100 or other partially additively manufactured component, relative to gravity, during the partial additive manufacturing process. Applied across the ribs 130, opposite either the base structure 120 or the immediately preceding adjacent layer 110 is a foil layer 140. The foil layer 140 is adhered to the previous layer of ribs 130 via the additive manufacturing machine 10 (see Figure 1) during the process of constructing the next layer.

Defined by adjacent ribs 130 and adjacent foil layers 140 (or a foil layer 140 and the base structure 120) are multiple channels 150. During operation of the heat exchanger 100, hot and cold fluids flow through alternating layers and heat is transferred from a hot channel to an adjacent cold channel through the foil layer 140 defining the boundary. By utilizing the foil layer 140 as the wall separating adjacent channels, the thickness (width of the foil layer 140 normal to fluid flow through the channel 150) of the created wall is minimized, thereby increasing the efficiency of heat transfer. The foil layer 140 allows a thinner wall construction than could be achieved using a purely additive manufacturing technique.

With continued reference to Figure 2, and with like numerals indicating like elements, Figure 3 schematically illustrates one layer 110 applied to a base structure 120 in an isometric fashion. Each of the ribs 130 in the exemplary embodiment has a height 112 in the range of 50-200 microns. In addition, each of the ribs 130 has a width, normal to the height, in the range of 500-2000 microns. The foil layer 140, illustrated in Figure 3 via dashed lines, has a thickness in the range of 15-35 microns. In one example, the thickness of the foil layer 140 is approximately 25 microns. As described above, such a thickness is un-achievable using conventional additive manufacturing. The dimensions of Figure 3 are not to scale and have been altered to more clearly illustrate the described embodiment.

Multiple considerations are relevant to the construction process of the partially additively manufactured heat exchanger 100 of Figures 2 and 3. By way of example, properly supporting and aligning each layer 110 on the previously constructed adjacent layer 110 is key to successful manufacturing. Similarly, ensuring that there is a sufficient heat path for the ribs 130 to dissipate heat from the additive manufacturing process through the base structure 120 is important to ensuring that a non-flawed component is manufactured.

In order to address these considerations, the cross sectional shape of each of the ribs 130 can be varied from the rectangular cross section illustrated in Figures 2 and 3. With continued reference to the heat exchanger of Figures 2 and 3, Figure 4 schematically illustrates a side view of a single layer 310 for a partially additively manufactured heat exchanger, including multiple ribs 332, 334, 336 having distinct cross sectional shapes. Each of the shaped ribs 332, 334, 336 has distinct advantages. In some examples, every rib in a given heat exchanger will have the same cross sectional shape. In alternative examples the cross sectional shapes of each rib in a given layer can be varied to achieve a desired structure. Further, the exemplary heat exchanger rib cross sections are not exhaustive, and alternate cross sections can be utilized depending on the needs of a given system.

The leftmost rib 332 has a trapezoidal cross section defined by a thinnest portion 302 at the connection to a base structure 320. In sequential layers, the thinnest portion 302 of the rib 332 is connected to a rib in the adjacent layer upon which the rib 332 is being constructed. The largest portion of the trapezoid is at the top, and provides a landing zone for aligning the rib in next layer sequentially. By providing the largest surface at the top, slight shifting in the alignment of the layers will still allow for construction of a properly constructed heat exchanger. One downside to this configuration, however, is that the connection between the rib 332 and the base 320 has a minimal contact area. As a result of the minimal contact area, heat dissipation from the rib 332 during the additive manufacturing process is limited, and can potentially lead to flaws in some examples.

The center rib 334 (outside the scope of the present invention) also includes a trapezoidal cross section, however the smallest thickness 304 of the rib 334 is positioned at the top edge of the layer 310. The cross sectional shape of the center rib 334 inverts the benefits and drawbacks of the leftmost rib 332, by providing minimal landing area for the next layer in the sequential construction, but providing maximal contact area for heat dissipation from creation of the rib 332 into the base plate 320.

In order to prevent either the landing area for the next rib from being too small, or the heat dissipation path during construction of the rib from being too small, an alternative rib shape that is a hybrid of the previous two ribs 332, 334 is utilized in some examples. The rightmost rib 336 (outside the scope of the present invention) illustrates one example hybrid shape. In the rightmost rib 336, the thinnest portion 306 of the rib 336 is positioned at, or near, the midpoint of the rib 336 height. In this way, the landing surface of the rib 336 at the top, and the heat dissipation of the rib 336 through contact with the base section 320 are both increased, but are not maximized. This configuration minimizes the detriments of the previously described ribs 332, 334, while still partially achieving the benefits of each previously described rib 332, 334.

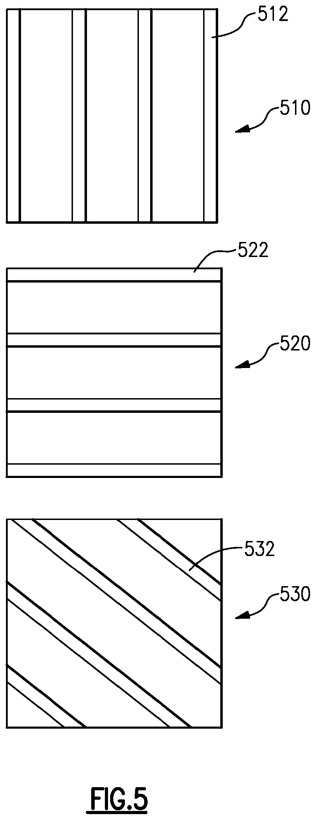

In some example partially additively manufactured heat exchangers, it can be desirable to have fluid flowing in a first set of channels in one direction, and fluid flowing through a second set of channels in another direction. To accomplish this, sequential layers of the heat exchanger are rotated relative to previous layers. By way of example, Figure 5 schematically illustrates three sequential layers 510, 520, 530, with layer 510 being the topmost layer, 520 being the middle layer, and 530 being the bottommost layer. By rotating the ribs 512, 522, 532 of each layer relative to the previous layer 510, 520, 530, the direction of the corresponding channels is rotated. This rotated channel is referred to as one layer 510, 520, 530 being skewed relative to an immediately adjacent layer. In some examples, such as the rotation between layers 510 and 520, the alternating channels can be orthogonal to each other due to the rotation. In other examples, such as the rotation between 520 and 530, the rotation can be at a different angle, resulting in skewed channels.

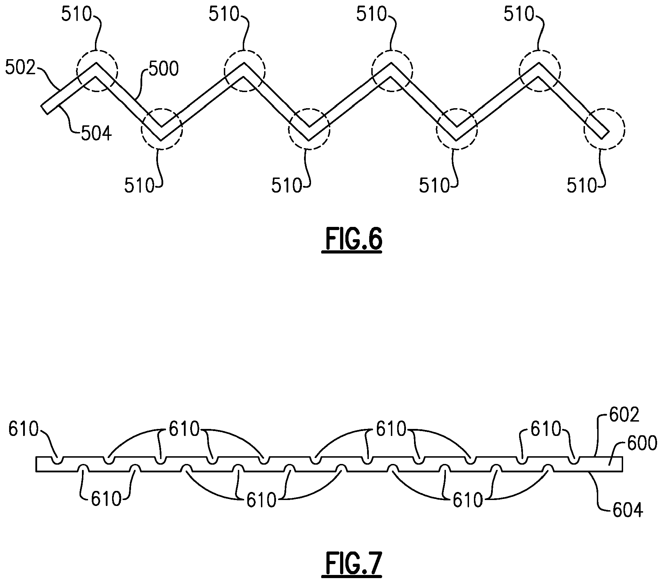

A further benefit that is achievable due to the partial additive manufacturing process for constructing the heat exchangers is that the foil layer can include corrugations which increase the surface area exposed to the fluid flowing through channels, and thereby increase the heat exchange through the channel wall defined by the foil layer. Figure 6 schematically illustrates a first corrugation style that can be used in conjunction with the above described partially additively manufactured heat exchanger to generate a foil layer. The corrugation of Figure 6 is referred to as macro corrugation and includes bends 510 in the foil 500, where both a top and a bottom surface 502, 504 of the foil are bent at the same location.

Alternatively, Figure 7 schematically illustrates a second corrugation style. The corrugation of Figure 7 is referred to as micro corrugation, and is achieved via a surface roughness of the foil 600, where the roughness does not extend through the layer. In other words, a divot 610, or bend on one surface 602, 604 does not correspond with a divot 610 or bend on the second surface opposite the surface including the divot or bend.

With reference to both Figure 6 and 7, the corrugation can be included in the foil when the foil 500, 600 is in the roll, and then applied to the ribs as described above, while maintaining the corrugation. Alternatively, the foil 500, 600 may be corrugated using any known corrugation process after the foil 500, 600 has been applied to the ribs to create a layer of the partially additively manufactured heat exchanger.

By incrementally building the heat exchanger using the partial additive manufacturing process described above, multiple materials can be utilized in the construction of the ribs, depending on the specific locational needs of the ribs within the heat exchanger. By way of example, the portion of the ribs at high corrosion potential locations can be constructed of specialty materials designed to mitigate corrosion. Alternatively, portions of the ribs can be made from slightly thicker materials, while materials and construction in other locations could be produced using lighter weight and thinner materials for high thermal conductivity.

While described herein as utilizing a powder bed manufacturing process, one of skill in the art will recognize that the process can be adapted to utilize powder feed, wire feed, or any other additive manufacturing process.

While illustrated and described herein using straight channels defined between two ribs, one of skill in the art will understand that the channels can be serpentine, include corners, or any other directional features, by altering the path of the corresponding ribs.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A heat exchanger (100) comprising:
a base structure (120;320); and
a plurality of layers (110;510,520,530) stacked on said base structure (120;320), each layer (110;510,520,530) including a plurality of additively manufactured ribs (130;332,334,336;512,522,532) extending from one of the base structure (120;320) and an adjacent layer (110...530) of the plurality of layers (110...530), and a foil layer (140;500;600) disposed across said additively manufactured ribs (130...532) such that a plurality of channels (150) are defined within each layer (110...530), charaterised in that the foil layer (140;500;600) has a thickness in the range of 15-35 microns, said additively manufactured ribs (332,334,336) have a tapered cross section and a smallest width (302) of each of said additively manufactured ribs (332) is a base of the rib (332), which is the part of the rib (332) closest to the base structure (120;320).

2. The heat exchanger (100) of claim 1, wherein the plurality of additively manufactured ribs (512,522,532) in at least one layer (510,520,530) of said plurality of layers (510,520,530) are skewed relative to the plurality of additively manufactured ribs (512,522,532) in an adjacent layer (510,520,530).

3. The heat exchanger (100) of claim 1, wherein the plurality of additively manufactured ribs (130;332,334,336) in at least one layer (110) of said plurality of layers (110) are aligned with the plurality of additively manufactured ribs (1230;332,334,336) in an adjacent layer (110).

4. The heat exchanger (100) of any preceding claim, wherein the foil layer (140;500;600) has a thickness of approximately 25 microns.

5. The heat exchanger (100) of any preceding claim, wherein each of said additively manufactured ribs (130...532) has a height in the range of 50-200 microns.

6. The heat exchanger (100) of any preceding claim, wherein each of said foil layers (140;500;600) includes micro corrugations (610), as herein defined.

7. The heat exchanger (100) of any preceding claim, wherein each of said foil layers (140;500;600) includes macro corrugations (510), as herein defined.

8. The heat exchanger (100) of any preceding claim, wherein the heat exchanger (100) is one of an air-air heat exchanger, an air-fuel heat exchanger, an air-oil heat exchanger, and a fuel-oil heat exchanger.

9. A method for constructing a partially additively manufactured heat exchanger (100) comprising:
building a first layer (110;510,520,530) by additively manufacturing a plurality of first layer ribs (130;332,334,336;512,522,532) on a base structure (120;320) and applying a foil wall (140;500;600) across the plurality of first layer ribs (130...532) opposite the base structure (120;320);
building at least one additional layer (110...530) by additively manufacturing a plurality of additional layer ribs (130...532) on a foil wall (140;500;600) of an adjacent layer (110...530) and applying a foil wall (140;500;600) across the additional layers (110...530) opposite the foil wall (140;500;600) of the adjacent layer (110...530); and
reiterating the step of building at least one additional layer (110...530) by additively manufacturing a plurality of additional layer ribs (130...532) on a foil wall (140;500;600) of an adjacent layer (110...530) and applying a foil wall (140;500;600) across the additional layers (110...530) opposite the foil wall (140;500;600) of the adjacent layer (110...530) a predetermined number of times, thereby creating a multi-layer heat exchanger (100), **characterised in that** the foil wall (140;500;600) has a thickness in the range of 15-35 microns, said additively manufactured ribs (332,334,336) have a tapered cross section and a smallest width (302) of each of said additively manufactured ribs (332) is a base of the rib (332), which is the part of the rib (332) closest to the base structure (120;320).

10. The method of claim 9, wherein additively manufacturing a plurality of additional ribs comprises additively manufacturing additional ribs (512,522,532) skewed relative to the ribs (512,522,532) of the adjacent layer (510,520,530).

11. The method of claim 9, wherein additively manufacturing a plurality of additional ribs comprises additively manufacturing additional ribs (130;322,334,336) aligned with the ribs (130;332,334,336) of the adjacent layer (110).

## Patentansprüche

1. Wärmetauscher (100), umfassend:
eine Basisstruktur (120; 320); und
eine Vielzahl von Schichten (110; 510, 520, 530), welche auf der Basisstruktur (120; 320) gestapelt sind, wobei jede Schicht (110; 510, 520, 530) eine Vielzahl von additiv gefertigten Rippen (130; 332, 334, 336; 512, 522, 532) beinhaltet, welche sich von einer von der Basisstruktur (120; 320) und einer benachbarten Schicht (110...530) der Vielzahl von Schichten (110...530) erstrecken, und eine Folienschicht (140; 500; 600), welche durch die additiv gefertigten Rippen (130...532) angeordnet ist, so dass eine Vielzahl von Kanälen (150) in jeder Schicht (110...530) definiert ist, **dadurch gekennzeichnet, dass**
die Folienschicht (140; 500; 600) eine Dicke im Bereich von 15-35 Mikrometern aufweist, die additiv gefertigten Rippen (332, 334, 336) einen konischen Querschnitt aufweisen und eine kleinste Breite (302) von jeder der additiv gefertigten Rippen (332) eine Basis der Rippe (332) ist, welche Teil der Rippe (332) ist, welche am nächsten zu der Basisstruktur (120; 320) ist.

2. Wärmetauscher (100) nach Anspruch 1, wobei die Vielzahl von additiv gefertigten Rippen (512, 522, 532) in mindestens einer Schicht (510, 520, 530) der Vielzahl von Schichten (510, 520, 530) bezogen auf die Vielzahl von additiv gefertigten Rippen (512, 522, 532) in einer benachbarten Schicht (510, 520, 530) abgeschrägt ist.

3. Wärmetauscher (100) nach Anspruch 1, wobei die Vielzahl von additiv gefertigten Rippen (130; 332, 334, 336) in mindestens einer Schicht (110) der Vielzahl von Schichten (110) an der Vielzahl von additiv gefertigten Rippen (130; 332, 334, 336) in einer benachbarten Schicht (110) ausgerichtet ist.

4. Wärmetauscher (100) nach einem der vorstehenden Ansprüche, wobei die Folienschicht (140; 500; 600) eine Dicke von ungefähr 25 Mikrometern aufweist.

5. Wärmetauscher (100) nach einem der vorstehenden Ansprüche, wobei jede der additiv gefertigten Rippen (130...532) eine Höhe im Bereich von 50-200 Mikrometern aufweist.

6. Wärmetauscher (100) nach einem der vorstehenden Ansprüche, wobei jede der Folienschichten (140; 500; 600) Mikrofurchen (610) beinhaltet, wie hierin definiert.

7. Wärmetauscher (100) nach einem der vorstehenden Ansprüche, wobei jede der Folienschichten (140; 500; 600) Makrofurchen (510) beinhaltet, wie hierin definiert.

8. Wärmetauscher (100) nach einem der vorstehenden Ansprüche, wobei der Wärmetauscher (100) einer ist von einem Luft-Luft-Wärmetauscher, einem Luft-Treibstoff-Wärmetauscher, einem Luft-Öl-Wärmetauscher und einem Treibstoff-Öl-Wärmetauscher.

9. Verfahren zum Konstruieren eines teilweise additiv gefertigten Wärmetauschers (100), umfassend:
Bauen einer ersten Schicht (110; 510, 520, 530) durch ein additives Fertigen einer Vielzahl von Rippen (130; 332, 334, 336; 512, 522, 532) einer ersten Schicht auf einer Basisstruktur (120; 320) und Aufbringen einer Folienwand (140; 500; 600) durch die Vielzahl von Rippen (130...532) einer ersten Schicht gegenüber der Basisstruktur (120; 320);
Bauen mindestens einer zusätzlichen Schicht (110...530) durch ein additives Fertigen einer Vielzahl von Rippen (130...532) einer zusätzlichen Schicht auf einer Folienwand (140; 500; 600) einer benachbarten Schicht (110...530) und Aufbringen einer Folienwand (140; 500; 600) durch die zusätzlichen Schichten (110...530) gegenüber der Folienwand (140; 500; 600) der benachbarten Schicht (110...530); und
Wiederholen des Schritts eines Bauens von mindestens einer zusätzlichen Schicht (110...530) durch ein additives Fertigen einer Vielzahl von Rippen (130...532) einer zusätzlichen Schicht auf einer Folienwand (140; 500; 600) einer benachbarten Schicht (110...530) und Aufbringen einer Folienwand (140; 500; 600) durch die zusätzlichen Schichten (110...530) gegenüber der Folienwand (140; 500; 600) der benachbarten Schicht (110...530) für eine vorbestimmte Anzahl von Malen, wodurch ein mehrschichtiger Wärmetauscher (100) erzeugt wird, **dadurch gekennzeichnet, dass** die Folienwand (140; 500; 600) eine Dicke im Bereich von 15-35 Mikrometern aufweist, die additiv gefertigten Rippen (332, 334, 336) einen konischen Querschnitt aufweisen und eine kleinste Breite (302) von jeder der additiv gefertigten Rippen (332) eine Basis der Rippe (332) ist, welche Teil der Rippe (332) ist, welche am nächsten zu der Basisstruktur (120; 320) ist.

10. Verfahren nach Anspruch 9, wobei ein additives Fertigen einer Vielzahl von zusätzlichen Rippen ein additives Fertigen von zusätzlichen Rippen (512, 522, 532) umfasst, welche bezogen auf die Rippen (512, 522, 532) der benachbarten Schicht (510, 520, 530) abgeschrägt sind.

11. Verfahren nach Anspruch 9, wobei ein additives Fertigen einer Vielzahl von zusätzlichen Rippen ein additives Fertigen von zusätzlichen Rippen (130; 322, 334, 336) umfasst, welche an den Rippen (130; 332, 334, 336) der benachbarten Schicht (110) ausgerichtet sind.

## Revendications

1. Échangeur de chaleur (100) comprenant :
une structure de base (120 ; 320) ; et
une pluralité de couches (110 ; 510, 520, 530) empilées sur ladite structure de base (120 ; 320), chaque couche (110 ; 510, 520, 530) comprenant une pluralité de nervures fabriquées de manière additive (130 ; 332, 334, 336 ; 512, 522, 532) s'étendant à partir de l'une de la structure de base (120 ; 320) et d'une couche adjacente (110...530) de la pluralité de couches (110...530), et une couche de feuille (140 ; 500 ; 600) disposée à travers lesdites nervures fabriquées de manière additive (130...532) de telle sorte qu'une pluralité de canaux (150) sont définis à l'intérieur de chaque couche (110... 530), **caractérisé en ce que** la couche de feuille (140 ; 500 ; 600) a une épaisseur dans la plage de 15 à 35 microns, lesdites nervures fabriquées de manière additive (332, 334, 336) ont une section transversale effilée et une plus petite largeur (302) de chacune desdites nervures fabriquées de manière additive (332) est une base de la nervure (332), qui est la partie de la nervure (332) la plus proche de la structure de base (120 ; 320).

2. Échangeur de chaleur (100) selon la revendication 1, dans lequel la pluralité de nervures fabriquées de manière additive (512, 522, 532) dans au moins une couche (510, 520, 530) de ladite pluralité de couches (510, 520, 530) est asymétrique par rapport à la pluralité de nervures fabriquées de manière additive (512, 522, 532) dans une couche adjacente (510, 520, 530).

3. Échangeur de chaleur (100) selon la revendication 1, dans lequel la pluralité de nervures fabriquées de manière additive (130 ; 332, 334, 336) dans au moins une couche (110) de ladite pluralité de couches (110) est alignée avec la pluralité de nervures fabriquées de manière additive (1230 ; 332,334,336) dans une couche adjacente (110).

4. Échangeur de chaleur (100) selon une quelconque revendication précédente, dans lequel la couche de feuille (140 ; 500 ; 600) a une épaisseur d'environ 25 microns.

5. Échangeur de chaleur (100) selon une quelconque revendication précédente, dans lequel chacune desdites nervures fabriquées de manière additive (130...532) a une hauteur dans la plage de 50 à 200 microns.

6. Échangeur de chaleur (100) selon une quelconque revendication précédente, dans lequel chacune desdites couches de feuille (140 ; 500 ; 600) comporte des micro-ondulations (610), telles que définies ici.

7. Échangeur de chaleur (100) selon une quelconque revendication précédente, dans lequel chacune desdites couches de feuille (140 ; 500 ; 600) comporte des macro-ondulations (510), telles que définies ici.

8. Échangeur de chaleur (100) selon une quelconque revendication précédente, dans lequel l'échangeur de chaleur (100) est l'un parmi un échangeur de chaleur air-air, un échangeur de chaleur air-carburant, un échangeur de chaleur air-huile et un échangeur de chaleur carburant-huile.

9. Procédé de construction d'un échangeur de chaleur (100) partiellement fabriqué de manière additive comprenant :
la construction d'une première couche (110 ; 510, 520, 530) en fabriquant de manière additive une pluralité de nervures de première couche (130 ; 332, 334, 336 ; 512, 522, 532) sur une structure de base (120 ; 320) et en appliquant une paroi en feuille (140 ; 500 ; 600) à travers la pluralité de nervures de première couche (130...532) à l'opposé de la structure de base (120 ; 320) ;
la construction d'au moins une couche supplémentaire (110...530) en fabriquant de manière additive une pluralité de nervures de couche supplémentaires (130...532) sur une paroi en feuille (140 ; 500 ; 600) d'une couche adjacente (110...530) et en appliquant une paroi en feuille (140 ; 500 ; 600) à travers les couches supplémentaires (110...530) à l'opposé de la paroi en feuille (140 ; 500 ; 600) de la couche adjacente (110...530) ; et
la réitération de l'étape de construction d'au moins une couche supplémentaire (110...530) en fabriquant de manière additive une pluralité de nervures de couche supplémentaires (130...532) sur une paroi en feuille (140 ; 500 ; 600) d'une couche adjacente (110...530) et en appliquant une paroi en feuille (140 ; 500 ; 600) à travers les couches supplémentaires (110...530) à l'opposé de la paroi en feuille (140 ; 500 ; 600) de la couche adjacente (110...530) un nombre prédéterminé de fois, créant ainsi un échangeur de chaleur multicouche (100), **caractérisé en ce que** la paroi en feuille (140 ; 500 ; 600) a une épaisseur dans la plage de 15 à 35 microns, lesdites nervures fabriquées de manière additive (332, 334, 336) ont une section transversale effilée et une plus petite largeur (302) de chacune desdites nervures fabriquées de manière additive (332) est une base de la nervure (332), qui est la partie de la nervure (332) la plus proche de la structure de base (120 ; 320).

10. Procédé selon la revendication 9, dans lequel la fabrication additive d'une pluralité de nervures supplémentaires comprend la fabrication additive de nervures supplémentaires (512, 522, 532) asymétriques par rapport aux nervures (512, 522, 532) de la couche adjacente (510, 520, 530).

11. Procédé selon la revendication 9, dans lequel la fabrication additive d'une pluralité de nervures supplémentaires comprend la fabrication additive de nervures supplémentaires (130 ; 322, 334, 336) alignées avec les nervures (130 ; 332, 334, 336) de la couche adjacente (110).
